# EUROPÄISCHE PATENTSCHRIFT

(11) **EP 3 640 397 B1**
(45) Veröffentlichungstag und Bekanntmachung des Hinweises auf die Patenterteilung: **21.07.2021**
(21) Anmeldenummer: 19208501.7
(22) Anmeldetag: 28.11.2013
(51) Int. Cl.: D21F 3/02, C08J 5/04, C08G 18/10, C08G 18/32

(54) **PRESSMANTEL FÜR PRESSWALZE**
PRESS COVER FOR PRESS ROLLER
ENVELOPPE DE PRESSAGE POUR ROULEAU PRESSEUR

(30) Priorität: 07.12.2012 DE 102012222546; 22.02.2013 DE 102013202941; 06.11.2013 DE 102013222458
(43) Veröffentlichungstag der Anmeldung: 22.04.2020
(62) Teilanmeldung aus: 13799002.4
(73) Patentinhaber: Voith Patent GmbH, 89522 Heidenheim (DE)
(72) Erfinder: DELMAS, Delphine, 89522 Heidenheim (DE); MATUSCHCZYK, Uwe, 73312 Geislingen (DE); REICHERT, Hermann, 89522 Heidenheim/Oggenhausen (DE); WOKUREK, Michael, 1100 Wien (AT)
(74) Vertreter: Voith Patent GmbH - Patentabteilung

(56) Entgegenhaltungen:
- EP-A1- 1 350 889
- EP-A1- 1 574 536
- EP-A1- 2 248 944
- WO-A1-2007/037495
- US-A1- 2007 213 157

## Beschreibung

Die Erfindung betrifft einen Pressmantel für eine Presswalze einer Schuhpresse zur Entwässerung einer Faserstoffbahn, insbesondere einer Papier-, Karton-, Tissue- oder Zellstoffbahn, in einer Maschine zur Herstellung derselben, nach dem Oberbegriff von Anspruch 1. Ein derartiger Pressmantel ist aus der Schrift EP 1 350 889 A1 bekannt.

Bei einer solchen Schuhpresse läuft die Materialbahn zusammen mit mindestens einem wasserdurchlässigen Pressband, z. B. einem Pressfilz, durch einen Nip, der von einer Presswalze und einer Gegenwalze gebildet wird. Die Presswalze besteht aus einem umlaufenden Pressmantel und einem stehenden Presselement, dem Schuh, der sich auf einem tragenden Joch abstützt und der über hydraulische Presselemente an den umlaufenden Pressmantel angedrückt wird. Der Pressmantel wird dadurch im Nip an die Gegenwalze gepresst. Die Faserstoffbahn kann auch zwischen zwei Pressfilzen oder zwischen einem Pressfilz und einem wasserundurchlässigen Transferband durch den Nip der Schuhpresse hindurch laufen.

Beim Durchlaufen der Faserstoffbahn durch den Nip wird Wasser aus der Materialbahn ausgepresst. Schuhpressen zeichnen sich dadurch aus, dass der Schuh durch eine konkave Form an die Gegenwalze angepasst werden kann und dass damit eine längere Presszone erzeugt wird. Die Länge des Nips beträgt bevorzugt mehr als 250 mm in Bahnlaufrichtung. Deshalb wird mit Schuhpressen deutlich mehr Wasser ausgepresst als mit normalen Walzenpressen. Das im Nip ausgepresste Wasser oder zumindest der in Richtung der Presswalze ausgepresste Anteil davon muss während des Nipdurchgangs vorübergehend im Pressfilz und im Pressmantel gespeichert werden. Nach Verlassen des Nips wird das Wasser vor dem erneuten Eintritt in den Nip vom Pressmantel in Wannen abgeschleudert beziehungsweise mit Hilfe von Saugelementen aus dem Filz entfernt. Um das nötige Speichervolumen für das Wasser während des Nipdurchgangs zu haben, werden die Pressmäntel vielfach mit Rillen oder Blindbohrungen auf der der Faserstoffbahn zugewandten Mantelfläche versehen.

Der Pressmantel muss ausreichend flexibel sein, damit er sich um den Schuh führen lässt, er muss ausreichend steif sein, damit er sich im Nip unter der Presslast nicht zu stark verformt oder komprimiert, und er muss ausreichend verschleißfest sein. Pressmäntel bestehen deshalb aus einer ein- oder mehrlagigen Polymerschicht, bevorzugt aus Polyurethan, in die Verstärkungsfäden in Form von Gelegen oder Geweben eingebettet sind.

Aus der EP 1 087 056 A2 ist ein derartiger Pressmantel bereits bekannt. Offenbart ist darin ein Pressmantel, der mit Blindbohrungen auf der Mantelfläche versehen ist, um das ausgepresste Wasser aufzunehmen.

In der EP 2 248 944 A1 wird ein Pressmantel für eine Schuhpresse beschrieben, welcher aus einer Lage aus vernetztem Polyurethan, in das Fasergewebe eingebettet ist, zusammengesetzt ist. Bei dem vernetzten Polyurethan handelt es sich um das Reaktionsprodukt aus einem Prepolymer, das aus einer 55 bis 100 Mol-% p-Phenylendiisocyanat, 4,4' Methylendiphenyldiisocyanat oder Toluylendiisocyanat enthaltenden Isocyanatkomponente und einer Polypropylenglykol, Polytetramethylenglykol oder Polycarbonatdiol enthaltenden Polyolkomponente hergestellt worden ist, und einer Vernetzerkomponente, welche 75 bis 99,9 Mol-% einer aliphatischen Diolverbindung mit einem Molekulargewicht zwischen 62 und 1.000, Hydrochinon-bis-β-hydroxylethylether oder einer organischen Polyaminverbindung mit einem Molekulargewicht zwischen 108 und 1.300 und 25 bis 0,1 Mol-% einer aliphatischen Triolverbindung mit einem Molekulargewicht zwischen 92 und 134 enthält. Zudem offenbart diese Druckschrift einen entsprechenden Pressmantel, zu dessen Herstellung eine Vernetzerkomponente eingesetzt wird, welche 60 bis 99,8 Mol-% einer aliphatischen Diolverbindung mit einem Molekulargewicht zwischen 62 und 1.000 oder Hydrochinon-bis-β-hydroxylethylether, 0,1 bis 15 Mol % einer organischen Polyaminverbindung mit einem Molekulargewicht zwischen 108 und 1.300 und 25 bis 0,1 Mol-% einer aliphatischen Triolverbindung mit einem Molekulargewicht zwischen 92 und 134 enthält.

Obwohl die vorstehenden Pressmäntel eine ausreichende Flexibilität und gleichzeitig ausreichende Steifigkeit aufweisen, sind deren chemische Beständigkeit insbesondere gegenüber Wasser und Öl, deren Abriebsfestigkeit, deren Rissbildungsbeständigkeit, deren Risswachstumsbeständigkeit und deren Quellverhalten verbesserungsbedürftig.

Es ist dementsprechend Aufgabe der Erfindung, durch Einsatz einer Mischung von Präpolymeren gezielt bestimmte Eigenschaften wie ein geringeres Quellungsverhalten zu erzielen und gleichzeitig gute dynamische Eigenschaften aufrecht zu erhalten.

Die Aufgabe wird gelöst durch die kennzeichnenden Merkmale des Anspruchs 1 in Verbindung mit den gattungsbildenden Merkmalen.

Erfindungsgemäß ist dabei vorgesehen, dass die wenigstens eine Schicht eine Polyurethan-Matrix wie in Anspruch 1 beschrieben enthält.

Die so hergestellten Polyurethane zeichnen sich durch hohe Abriebsbeständigkeit, geringe Neigung zu Rissbildung und Risswachstum, geringe Empfindlichkeit gegenüber Wasser, Öl, Säuren, Laugen, Lösungsmitteln sowie eine geringe Quellneigung in den vorgenannten Substanzen aus.

Weitere vorteilhafte Aspekte der Erfindung gehen aus den Unteransprüchen hervor.

Bevorzugt kann das Mischungsverhältnis der zumindest zwei Polyole 90/10 bis 10/90, bevorzugt 50/50 betragen. Insbesondere letzteres Mischungsverhältnis ist besonders vorteilhaft in Bezug auf die Verarbeitbarkeit durch die Reaktionsgeschwindigkeit, die Viskosität sowie die Quellung und die dynamischen Eigenschaften. Ganz besonders ist das genannte Mischungsverhältnis in Bezug auf die Viskosität als vorteilhaft zu sehen.

PPDI zeichnet sich durch sehr gute dynamische Eigenschaften und Hydrolysebeständigkeit aus, NDI ist sehr gut hitze- und wasserbeständig.

Erfindungsgemäße Polyole umfassen Polyetherpolyol (z.B. Polytetramethylenetherglycol (PTMEG)), Polycarbonatpolyol und Polyethercarbonatpolyol. Die genannten Polyole sind kommerziell erhältlich und können je nach Anforderungen gemischt und verarbeitet werden.

Der Vernetzer kann bevorzugt ausgewählt sein aus Ethylenglycol, Diethylenglycol, Propylenglycol, Dipolypropylenglycol, Polypropylenglycol, Polybutylenglycol, 1,4-Butanediol, 1,3-Propanediol, 1,5-Pentanediol, 1,6-Hexanediol, Polyethylenglycol, Dihydroxymethylpropionic acid (DHPA), Hydroquinon bis 2-Hydroxyethylether (HQEE), Hydroxyphenylether resorcinol (HER), Trimethylolpropan (TMP), Hydrazine, Ethylendiamine, Diethylentoluoldiamin (DEDTA), Diethylmethylbenzenediamine (DETDA), Methylen-bis-Orthochloroanilin (MOCA), Dimethylthiotoluoldiamin (DMTDA), Trimethylenglycoldi(p-Aminobenzoat) (TMAB), 4,4'-methylen-bis-(3-chloro-2,6-diethylanilin) (MCDEA), 4,4'-Methylen-bis-(2,6-diethylahilin) (MDEA), Triisopropanolamin (TIPA), Bis-(4-aminocyclohexyl)-methan (PACM). Der Vernetzer kann weiterhin teilweise aus den Polyolen bestehen oder eines oder mehrere der Polyole enthalten, welche zur Herstellung des Präpolymers verwendet werden.

Gemäß einer vorteilhaften Ausführungsform der Erfindung kann der Pressmantel aus mehreren Schichten aufgebaut sein, wobei die wenigstens eine Polyurethan enthaltende Schicht die äußerste Schicht ist. Dies ist von Vorteil, weil dadurch die chemischen, mechanischen und dynamischen Eigenschaften des Pressmantels getrennt voneinander einstellbar sind.

Die Erfindung wird nachfolgend unter Bezugnahme auf ein bevorzugtes Ausführungsbeispiel näher erläutert.

Gängigerweise sind Pressmäntel für Schuhpresswalzen aus einem Polyurethanmaterial aufgebaut. In die Polyurethan-Matrix ist eine Verstärkung in Form von Garnen eingebettet. Dies kann ein Fadengelege oder auch ein Gewebe sein. Auf eine detaillierte Beschreibung kann an dieser Stelle verzichtet werden, da dies hinreichend aus dem Stand der Technik bekannt ist.

Der Pressmantel wird gewöhnlich durch Gießen des Polyurethans hergestellt. Dabei wird zunächst die Verstärkung auf einen Gießkern aufgewickelt und nachfolgend das Polyurethan aus in Längsrichtung des Gießkerns verschiebbaren Düsen aufgetragen, während sich der Gießkern unter den Düsen um seine Längsachse dreht. Dadurch wird das Polyurethan in einem bandartigen Auftrag, bei dem die Wicklungen zumindest auf Stoß aneinanderliegen, aufgebracht.

Der Auftrag kann in einer oder mehreren Schichten erfolgen, wobei auch Materialvariationen wie Füllstoffgradienten in verschiedenen Schichten möglich sind. Nach dem Aushärten des Polyurethans wird der Pressmantel weiteren Bearbeitungsschritten unterzogen, beispielsweise mit Oberflächenstrukturen versehen und abschließend vom Gießkern abgezogen.

Aus dem obenstehenden Verfahren ergeben sich diverse Forderungen an die Polyurethanmischung. Einerseits muss die Viskosität beim Austritt aus der Düse einen gleichmäßigen Auftrag erlauben, andererseits darf das Polyurethan nicht zu dünnflüssig sein, da es sonst beim Drehen des Gießkerns verläuft und abtropft. Die sogenannte Topfzeit, welche Auskunft über die Vernetzung des Polyurethans im Zeitverlauf gibt, sollte somit so gewählt sein, dass das Polyurethan zwar beim Auftrag fest genug ist, um nicht abzutropfen, jedoch noch reaktiv genug, um bei der nächsten Windung mit der neu aufgetragenen Polyurethanmasse noch eine Verbindung eingehen zu können.

Die Pressmäntel von Schuhpresswalzen sind weiterhin, wie bereits weiter oben kurz angeschnitten, einer Vielzahl von chemischen und mechanischen Belastungen unterworfen. Neben dem nassen Umfeld, welches neben Wasser unter anderem auch ölhaltige Substanzen und weitere Chemikalien enthalten kann, sind insbesondere die mechanischen Belastungen auf den Pressmantel von Bedeutung. Durch die gegenläufigen Biegebewegungen beim Ein- und Auslaufen in den Nip unterliegen die Pressmäntel zusätzlich zu den im Nip herrschenden Drücken starken, teilweise gegenläufig wirkenden Belastungen. Ist das Material des Pressmantels durch chemische Einwirkungen oder Quellung geschwächt, wird es zu Rissen kommen, die zum Versagen des Pressmantels führen. In der Folge können schwere Beschädigungen der Presswalze oder sogar der nachfolgenden Sektionen der Maschine auftreten, wenn beispielsweise das Polyurethan delaminiert und sich Stücke des Pressmantels ablösen. Vor allem in Bezug auf die Arbeitssicherheitsaspekte für das Bedienpersonal ist hier ein sicherer Betrieb des Pressmantels von hoher Bedeutung.

Nachfolgend wird eine Polyurethanmischung beschrieben, die den vorstehend genannten Forderungen Rechnung trägt und die Herstellung eines Pressmantels erlaubt, der neben einer hohen mechanischen und chemischen Beständigkeit ausgezeichnete dynamische Eigenschaften aufweist.

Die Rohstoffe für Polyurethan sind hauptsächlich Isocyanate, Polyole und Polyamine. Üblicherweise wird ein Isocyanatpräpolymer benutzt. Ein Isocyanatpräpolymer entsteht aus Isocyanatmonomeren, die teilweise mit einem Polyol oder mit einer Mischung von Polyolen reagiert wurden. Diisocyanate sind dabei von besonders hoher Bedeutung, da sie die beste Flexibilität und dynamische Belastbarkeit bieten.

Die Eigenschaften des Polyurethans sind von vielen Faktoren abhängig: vom Isocyanatmonomertyp, vom Anteil der freien Monomere, vom Verhältnis XH/NCO, von Typ, Funktionalität und Molekulargewicht der Polyole, von Typ, Funktionalität und Molekulargewicht der Polyamine, von eventuell vorhandenen Füllstoffen, Katalysatoren etc.

Als Polyole finden für die Anwendung in Pressmänteln Polyetherpolyol (z.B. Polytetramethylenetherglycol (PTMEG)), Polycarbonatpolyol oder Polyethercarbonatpolyol Verwendung.

Die als Vernetzer zur Verwendung kommenden Polyamine und/oder Polyole können ausgewählt sein aus Hydrazine, Ethylendiamine, Diethylentoluoldiamin (DEDTA), Diethylmethylbenzenediamine (DETDA), Methylen-bis-Orthochloroanilin (MOCA), Dimethylthiotoluoldiamin (DMTDA), Trimethylenglycoldi(p-Aminobenzoat) (TMAB), 4,4'-methylen-bis-(3-chloro-2,6-diethylanilin) (MCDEA), 4,4'-Methylen-bis-(2,6-diethylanilin) (MDEA), Triisopropanolamin (TIPA), Bis-(4-aminocyclohexyl)-methan (PACM); Ethylenglycol, Diethylenglycol, Propylenglycol, Dipolypropylenglycol, Polypropylenglycol, Polybutylenglycol, 1,4-Butanediol, 1,3-Propanediol, 1,5-Pentanediol, 1,6-Hexanediol, Polyethylenglycol, Dihydroxymethylpropionic acid (DHPA), Hydroquinon bis 2-Hydroxyethylether (HQEE), Hydroxyphenylether resorcinol (HER), Trimethylolpropan (TMP) usw. Der Vernetzer kann weiterhin teilweise aus den Polyolen bestehen oder eines oder mehrere der Polyole enthalten, welche zur Herstellung des Präpolymers verwendet wurden.

Die wichtigsten mechanischen Eigenschaften der Polyurethan-Matrix für einen Pressmantel sind Abriebsbeständigkeit, geringe Neigung zu Rissbildung und Risswachstum, geringe Empfindlichkeit gegenüber Wasser, Öl, Säuren, Laugen, Lösungsmitteln sowie eine geringe Quellneigung in den vorgenannten Substanzen.

Die positiven Eigenschaften von MDI-, NDI-, TDI-, TODI-, PPDI- und DBDI-basierten Polyurethanen sind bereits bekannt. PTMEG ist ein gängiges Polyol, das für die Herstellung von "high performance" Polyurethan-Elastomeren verwendet wird. Der Nachteil von PTMEG ist die geringe thermooxidative Stabilität, was die Lebensdauer des Pressmantels reduziert.

Die dynamischen Eigenschaften von PTMEG-basierten Polyurethanen sind hingegen tendenziell gut im Vergleich zu anderen (Polyether)polyolen.

Polycarbonatdiole (PCDL) sind derzeit relativ teuer und schwierig zu verarbeiten wegen ihrer hohen Viskosität. Verbesserte oder gemischte Eigenschaften sind nicht systematisch zu erwarten, wenn man zwei verschiedene Polyole zusammenmischt. Im Gegenteil kann sogar eines die molekulare Anordnung des anderen stören. Ebenso kann die hart/weiche Segmentanordnung gestört werden und zu einer Verschlechterung der Eigenschaften führen.

Überraschenderweise hat sich in Versuchen jedoch gezeigt, dass die gemäß nachstehend näher ausgeführtem Beispiel ausgewählten Polyole hervorragende Mischeigenschaften aufweisen und somit für den Anwendungszweck in den eingangs genannten Pressmänteln bestens geeignet sind.

Zusätzliche Vorteile sind reduzierte Kosten und einfache Verarbeitung, da die Viskosität der Mischung angemessen bleibt.

Laboruntersuchungen haben gezeigt, dass eine Mischung von 50/50 Gewichts-% der zwei Präpolymere (MDI-PTMEG)/(MDI-PCDL) folgendes Eigenschaftsprofil ergibt: reduzierte Quellung (in Wasser und H₂O₂), gute dynamische Eigenschaften, durchschnittliche Viskosität des Präpolymers, so dass die Verarbeitung möglich ist. Der Vernetzer enthält dabei -80% molar MCDEA und ∼ 20% molar Polycarbonatdiol. Die angestrebte Härte beträgt 90 bis 97 ShoreA. Der einschlägig gebildete Fachmann kann aufgrund der Forderung, dass die Stöchiometrie zwischen 0,85 und 1,15 bleiben sollte, die korrekten Mischungsverhältnisse von Präpolymer und Vernetzer bestimmen.

Probleme mit der Reaktionsgeschwindigkeit, welche insbesondere bei der Vernetzung mit MCDEA zu hoch werden kann, können durch die 50/50-Mischung wirksam behoben werden. Die Reaktionsgeschwindigkeit wird gesenkt.

Die Quellung durch oxidative Mittel (H₂O₂) wird proportional stark reduziert, bei der 50/50-Mischung um 60%.

Denkbar wäre auch, zunächst eine Mischung aus zwei Polyolen PTMEG und PCDL herzustellen und dann die Reaktion mit MDI durchzuführen. Das Präpolymer wäre dann also aus MDI/(PTMEG-PCDL) hergestellt.

Gemäß der Erfindung besteht das Präpolymer aus einem Polyether-PolycarbonatPolyol, das Polyol enthält somit Ether-Gruppen und Carbonat-Gruppen.

Das MDI wird gemäß der Erfindung durch PPDI, TODI oder NDI ganz ersetzt.

Weiterhin ist denkbar, dass der Pressmantel aus mehreren Schichten aufgebaut ist. So kann eine äußere Schicht, welche mit dem Pressfilz und/oder der Faserstoffbahn in Kontakt tritt und somit Wasser und anderen chemischen Substanzen ausgesetzt ist, besonders resistent gegen Quellung sein, indem die oben genannten erfindungsgemäßen Präpolymer-Mischungen verwendet werden, während die innenliegenden Schichten mit anderen Präpolymeren aufgebaut sein können. Dies. hat unter anderem den Vorteil, dass die mechanischen und chemischen Eigenschaften des Pressmantels getrennt voneinander beeinflussen lassen.

Ebenfalls ist denkbar, dass die oben genannten Präpolymermischungen nur in bestimmten Bereichen des Mantels eingesetzt werden, z.B. am Schuhrand. In diesen Bereichen ist die Belastung besonders hoch, da einerseits der Rand des Pressschuhs mechanisch auf den Pressmantel einwirkt und andererseits die Papierbahnränder die Randbereiche mechanisch durch Oszillationen belasten.

## Patentansprüche

1. Pressmantel für eine Presswalze, insbesondere für eine Presswalze einer Schuhpresse zur Entwässerung einer Faserstoffbahn, insbesondere einer Papier-, Karton-, Tissue- oder Zellstoffbahn, oder Transportband, insbesondere für eine Maschine zur Herstellung oder Behandlung einer Faserstoffbahn, insbesondere Papier-, Karton- oder Tissuemaschine, wobei der Pressmantel bzw. das Transportband wenigstens eine Polyurethan enthaltende Schicht umfasst, wobei die wenigstens eine Schicht eine Polyurethan-Matrix mit einem Präpolymer aufweist, welches ein Reaktionsprodukt aus einem Polyisocyanat mit einer Mischung aus zumindest zwei unterschiedlichen Polyolen ist, und zumindest einem Vernetzer, **dadurch gekennzeichnet, dass** das Präpolymer ein Reaktionsprodukt aus 3.3'-Dimethyl-4,4'-biphenylendiisocyanat (TODI), 1,4-Phenylendiisocyanat (PPDI) oder Naphthylen-1,5-diisocyanat (NDI) mit der Mischung aus den zumindest zwei unterschiedlichen Polyolen aus Polyetherpolyol, wie Polytetramethylenetherglycol (PTMEG) oder Polyethercarbonatpolyol, und Polycarbonatpolyol ist.

2. Pressmantel nach Anspruch 1, **dadurch gekennzeichnet, dass** das Mischungsverhältnis der zumindest zwei Polyole 95/5 bis 5/95, bevorzugt 50/50 beträgt.

3. Pressmantel nach einem der vorstehenden Ansprüche, **dadurch gekennzeichnet, dass** der Vernetzer ausgewählt ist aus Ethylenglycol, Diethylenglycol, Propylenglycol, Dipolypropylenglycol, Polypropylenglycol, Polybutylenglycol, 1,4-Butanediol, 1,3-Propanediol, 1,5-Pentanediol, 1,6-Hexanediol, Polyethylenglycol, Dihydroxymethylpropionic acid (DHPA), Hydroquinon bis 2-Hydroxyethylether (HQEE), Hydroxyphenylether resorcinol (HER), Trimethylolpropan (TMP), Hydrazine, Ethylendiamine, Diethylentoluoldiamin (DETDA), Diethylmethylbenzenediamine (DETDA), Methylen-bis-Orthochloroanilin (MOCA), Dimethylthiotoluoldiamin (DMTDA), Trimethylenglycoldi(p-Aminobenzoat) (TMAB), 4,4'-methylen-bis-(3-chloro-2,6-diethylanilin) (MCDEA), 4,4'-Methylen-bis-(2,6-diethylanilin) (MDEA), Triisopropanolamin (TIPA), Bis-(4-aminocyclohexyl)-methan (PACM) und/oder dass der Vernetzer teilweise oder ganz aus den Polyolen besteht oder zumindest eines der Polyole enthält, mit welchen das Präpolymer hergestellt ist.

4. Pressmantel nach einem der vorstehenden Ansprüche, **dadurch gekennzeichnet, dass** die wenigstens eine Polyurethan enthaltende Schicht die äußerste Schicht ist.

## Claims

1. Press jacket for a press roll, especially for a press roll of a shoe press for dewatering of a web of fibrous material, especially a paper web, paperboard web, tissue web or pulp web, or conveyor belt, especially for a machine for production or treatment of a web of fibrous material, especially paper machine, paperboard machine or tissue machine, wherein the press jacket or conveyor belt comprises at least one polyurethane-containing layer, wherein the at least one layer includes a polyurethane matrix having a prepolymer which is a reaction product of a polyisocyanate with a mixture of at least two different polyols, and at least one crosslinker, **characterized in that** the prepolymer is a reaction product of 3,3'-dimethylbiphenylene 4,4'-diisocyanate (TODI), phenylene 1,4-diisocyanate (PPDI) or naphthylene 1,5-diisocyanate (NDI) with the mixture of the at least two different polyols from polyetherpolyol, such as polytetramethylene ether glycol (PTMEG) or polyethercarbonate polyol, and polycarbonate polyol.

2. Press jacket according to Claim 1, **characterized in that** the mixing ratio of the at least two polyols is 95/5 to 5/95, preferably 50/50.

3. Press jacket according to either of the preceding claims, **characterized in that** the crosslinker is selected from ethylene glycol, diethylene glycol, propylene glycol, dipolypropylene glycol, polypropylene glycol, polybutylene glycol, butane-1,4-diol, propane-1,3-diol, pentane-1,5-diol, hexane-1,6-diol, polyethylene glycol, dihydroxymethylpropionic acid (DHPA), hydroquinone bis(2-hydroxyethyl ether) (HQEE), hydroxyphenyl ether resorcinol (HER), trimethylolpropane (TMP), hydrazines, ethylene-diamines, diethylenetoluenediamine (DEDTA), diethylmethylbenzenediamines (DETDA), methylenebis-(orthochloroaniline) (MOCA), dimethylthiotoluene-diamine (DMTDA), trimethylene glycol di(p-aminobenzoate) (TMAB), 4,4'-methylenebis(3-chloro-2,6-diethylaniline) (MCDEA), 4,4'-methylenebis(2,6-diethylaniline) (MDEA), triisopropanolamine (TIPA), bis(4-aminocyclohexyl)methane (PACM) and/or **in that** the crosslinker consists partly or wholly of the polyols or comprises at least one of the polyols with which the prepolymer is prepared.

4. Press jacket according to any of the preceding claims, **characterized in that** the at least one polyurethane-containing layer is the outermost layer.

## Revendications

1. Enveloppe de compression pour un cylindre de compression, en particulier pour un cylindre de compression d'une presse à sabot pour la déshydratation d'une bande de matière fibreuse, en particulier d'une bande de papier, de carton, de papier tissu ou de cellulose, ou bande de transport, en particulier pour une machine pour la fabrication ou le traitement d'une bande de matière fibreuse, en particulier une machine pour le papier, le carton ou le papier tissu, l'enveloppe de compression ou la bande de transport comprenant au moins une couche contenant un polyuréthane, ladite au moins une couche comprenant une matrice de polyuréthane contenant un prépolymère, qui est un produit de réaction d'un polyisocyanate avec un mélange d'au moins deux polyols différents, et au moins un agent de réticulation, **caractérisée en ce que** le prépolymère est un produit de réaction de diisocyanate de 3,3'-diméthyl-4,4'-biphénylène (TODI), de diisocyanate de 1,4-phénylène (PPDI) ou de 1,5-diisocyanate de naphtylène (NDI) avec le mélange desdits au moins deux polyols différents de polyéther-polyol, tel que polytétraméthylène-éther-glycol (PTMEG) ou polyéther-carbonate-polyol, et polycarbonate-polyol.

2. Enveloppe de compression selon la revendication 1, **caractérisée en ce que** le rapport de mélange entre lesdits au moins deux polyols est de 95/5 à 5/95, de préférence de 50/50.

3. Enveloppe de compression selon l'une quelconque des revendications précédentes, **caractérisée en ce que** l'agent de réticulation est choisi parmi l'éthylène glycol, le diéthylène glycol, le propylène glycol, le dipolypropylène glycol, le polypropylène glycol, le polybutylène glycol, le 1,4-butanediol, le 1,3-propanediol, le 1,5-pentanediol, le 1,6-hexanediol, le polyéthylène glycol, l'acide dihydroxyméthylpropionique (DHPA), l'éther bis-2-hydroxyéthylique d'hydroquinone (HQEE), l'hydroxyphényléther-résorcinol (HER), le triméthylolpropane (TMP), l'hydrazine, les éthylène-diamines, la diéthylène-toluène-diamine (DETDA), les diéthylméthylbenzène-diamines (DETDA), la méthylène-bis-orthochloroaniline (MOCA), la diméthylthiotoluène-diamine (DMTDA), le di(p-aminobenzoate) de triméthylène glycol (TMAB), la 4,4'-méthylène-bis-(3-chloro-2,6-diéthylaniline) (MCDEA), la 4,4'-méthylène-bis-(2,6-diéthylaniline) (MDEA), la triisopropanolamine (TIPA), le bis-(4-aminocyclohexyl)-méthane (PACM) et/ou **en ce que** l'agent de réticulation est constitué en partie ou en totalité par les polyols ou contient au moins un des polyols avec lesquels le prépolymère est fabriqué.

4. Enveloppe de compression selon l'une quelconque des revendications précédentes, **caractérisée en ce que** ladite au moins une couche contenant un polyuréthane est la couche la plus extérieure.
